# EUROPÄISCHE PATENTANMELDUNG

(11) **EP 3 435 619 A1**
(43) Veröffentlichungstag der Anmeldung: **30.01.2019**
(21) Anmeldenummer: 17183062.3
(22) Anmeldetag: 25.07.2017
(51) Int. Cl.: H04L 29/06

(54) **PAIRINGVERFAHREN VON IOT-GERÄTEN ZU CLOUDDIENSTEN**

(71) Anmelder: Siemens Aktiengesellschaft, 80333 München (DE)
(72) Erfinder: Heindl, Elisabeth, 90556 Cadolzburg (DE); Kaefer, Gerald, 81739 München (DE); Riedl, Wolfgang, 90443 Nürnberg (DE)

(57) **Zusammenfassung**

Vorgeschlagen wird ein Verfahren zum Verbinden eines IoT-Gerätes (1) mit einem Clouddienst (2), wobei das IoT-Gerät (1) eine Vorrichtung zur Aussendung optischer und/oder akustischer Signale (3) aufweist, und wobei der Clouddienst (2) einen Onboarding-Service (4) aufweist, der zur Annahme von Anfragen des IoT-Gerätes (1) ausgebildet ist, umfassend: Kontaktaufnahme zu dem Clouddienst (2) mittels eines dazu ausgebildeten Kontaktgerätes (5), welches eine Vorrichtung zur Erfassung von Bildinformationen und/oder Akustikinformationen aufweist (6), insbesondere eine Kamera und/oder ein Mikrofon; Ausrichten der Vorrichtung zur Erfassung von Bildinformationen und/oder Akustikinformationen (6), derart, dass die Vorrichtung zur Aussendung optischer und/oder akustischer Signale (3) des IoT-Gerätes (2) von der Vorrichtung zur Erfassung von Bildinformationen und/oder Akustikinformationen des Kontaktgerätes (6) optisch und/oder akustisch erfassbar ist; Übertragen von Geräteinformationen des IoT-Gerätes (1) mittels der Vorrichtung zur Aussendung optischer und/oder akustischer Signale (3) und mittels des Kontaktgerätes (5) an den Onboarding-Service (4) des Clouddienstes (2), wobei der Onboarding-Service (4) die übertragenen Geräteinformationen automatisch in einem speziellen Gerätekonfigurationsspeicher (7) hinterlegt; Übertragen von Netzwerkkonfigurationsdaten an den Onboarding-Service (4) des Clouddienstes (2) mittels des Kontaktgerätes (5); Erstellen eines Pairing Connectivity Files durch den Onboarding-Service (4); Übertragen des Pairing Connectivity Files an das IoT-Gerät (1) mittels des Kontaktgerätes (5); Aufbau der Verbindung von dem IoT-Gerät (1) zu dem Clouddienst (2).

## Beschreibung

Die Erfindung betrifft ein Verfahren zur zum Verbinden eines Internet-of-Things Gerätes mit einem Clouddienst nach Anspruch 1. Außerdem betrifft die Erfindung ein dazugehöriges Verbindungssystem zum Verbinden eines Internet-of-Things Gerätes mit einem Clouddienst nach Anspruch 7.

Im Rahmen einer Digitalisierung von Industrieanlagen werden Feldgeräte immer häufiger mit Clouddiensten, welche typischerweise über das Internet betrieben werden, verbunden. Man spricht in diesem Zusammenhang auch von einem Internet-of-Things Gerät (IoT), um das Feldgerät näher zu spezifizieren. Da es sich in dem industriellen Kontext um ein sensibles Umfeld handelt, sind verschiedene Auto-Konfigurations-Mechanismen, die aus einem Home-Automation Umfeld bekannt sind, hier nicht anwendbar.

Eine erste Anforderung, die für die Digitalisierung der Feldgeräte erfüllt werden muss, ist eine Übertragung von Konfigurationsinformationen, insbesondere ein (lokaler) Netzwerkkontext und verschiedene Datenpunkte, von dem Clouddienst zu den Feldgeräten. Dies ist notwendig, da der lokale Netzwerkkontext, beispielsweise DHCP-Informationen, Informationen eines Proxyservers oder IO-Adressen, und die Datenpunkte regelmäßig für jedes Feldgerät innerhalb einer industriellen, technischen Anlage verschieden sind.

Eine zweite Anforderung besteht darin, aus Sicherheitsgründen möglichst wenige Schnittstellen der Verbindung von Feldgerät bzw. Internet-of-Things Gerät zu Clouddienst zur Übertragung der Konfigurationsinformationen zu öffnen.

Zudem sollen die Hardwarekosten für die Verbindung zwischen Feldgerät bzw. Internet-of-Things Gerät und Clouddienst minimalisiert werden.

Schließlich sollen eine Bedienung des Feldgerätes bzw. des Internet-of-Things Gerätes und eine Herstellung der Verbindung des Feldgerätes bzw. des Internet-of-Things Gerätes zu dem Clouddienst möglichst einfach gestaltet sein.

Im Umfeld der von Siemens entwickelten MindSphere(R) SaaS-Lösung (Software as a Service) werden Internet-of-Things Geräte bisher gemäß dem folgenden Verfahren mit einem Clouddienst verbunden:
a) Der Netzwerkkontext, insbesondere DHCP-Informationen, Informationen eines Proxyservers oder IO-Adressen, sowie Datenpunkte werden von einem lokalen IT-Administrator ermittelt, nachdem der IT-Administrator ein dazugehöriges Verbindungsnetzwerk aufgebaut hat;
b) In einem mittels eines von dem Internet-of-Things Gerät separaten Kontaktgerätes aufgerufenen Softwareportal der MindSphere(R) SaaS-Lösung wird ein Onboarding-Service des Clouddienstes gestartet, wobei Konfigurationsinformationen des Internet-of-Things Gerätes, welches mittels einer Gerätenummer identifiziert wird, an den Onboarding-Service übermittelt werden;
c) Anschließend generiert der Onboarding-Service des Clouddienstes ein Pairing Connectivity File, welches Informationen über die Verbindung zwischen dem Internet-of-Things Gerät und dem Clouddienst sowie ein Maschinenzertifikat des Internet-of-Things Gerätes umfasst;
d) Das Pairing Connectivity File wird mittels des Kontaktgerätes auf einen USB-Stick übertragen und der USB-Stick mit dem Internet-of-Things Gerät verbunden;
e) Das Internet-of-Things Gerät liest die auf dem USB-Stick gespeicherten Informationen aus und vergleicht die Informationen mit einem auf dem Internet-of-Things Gerät hinterlegten Zertifikat und übernimmt die Konfigurationsinformationen, wenn sie gültig sind.
f) Zuletzt wird die Verbindung zwischen Internet-of-Things Gerät und dem Clouddienst hergestellt.

Wenn die Verbindung von dem Internet-of-Things Gerät zu dem Clouddienst erfolgreich aufgebaut wurde, wird dies mittels zweier an dem Internet-of-Things Gerät angebrachter, grün leuchtender Status-LED angezeigt. Ist die Verbindung nicht zustande gekommen, wird dies beispielsweise mittels einer gelben/orangen/roten Farbgebung angezeigt. Eine Fehlerfindung ist aufgrund der limitierten Informationsdarstellung nicht einfach zu bewerkstelligen. Zudem wird eine Fehlerdiagnose dadurch erschwert, dass sich das Internet-of-Things Gerät zum Zeitpunkt der Erzeugung des Pairing Connectivity Files nicht in demselben Netzwerkkontext wie das Kontaktgerät und der Clouddienst befinden, so dass etwaige Netzwerkdiagnosemittel des Kontaktgerätes nicht zur Fehlersuche verwendet werden können.

Um eine detaillierte Diagnose durchführen zu können, müssen bisher Logfiles des Internet-of-Things Gerätes auf einen USB-Stick übertragen werden und anschließend auf einem externen Gerät von einem IT-Administrator analysiert werden. Diese Art der Diagnose ist zeitaufwändig und bindet Personalressourcen, da immer ein IT-Administrator oder eine vergleichbar qualifizierte Fachkraft an dem Internet-of-Things Gerät sein muss, um mögliche Fehlerquellen, beispielsweise Fehler beim Übermitteln von Konfigurationsinformationen, identifizieren zu können.

Der Erfindung liegt die Aufgabe zugrunde, ein Verfahren zum Verbinden eines Internet-of-Things Gerätes mit einem Clouddienst anzugeben, das eine automatisierbare Fehlersuche bei Verbindungsproblemen zwischen dem Internet-of-Things Gerät und dem Clouddienst ermöglicht.

Diese Aufgabe wird gelöst durch ein Verfahren zum Verbinden eines Internet-of-Things Gerätes mit einem Clouddienst mit den Merkmalen des Anspruchs 1 und durch ein Verbindungssystem zum Verbinden eines Internet-of-Things Gerätes mit einem Clouddienst gemäß Anspruch 7. Vorteilhafte Weiterbildungen ergeben sich aus den abhängigen Ansprüchen.

Bei einem Verbindungsverfahren der eingangs beschriebenen Art wird die Aufgabe erfindungsgemäß dadurch gelöst, dass das Internet-of-Things Gerät eine Vorrichtung zur Aussendung optischer und/oder akustischer Signale aufweist, insbesondere wenigstens eine Leuchtdiode und/oder einen Lautsprecher, und der Clouddienst einen Onboarding-Service aufweist, der zur Annahme von Anfragen des Internet-of-Things Gerätes ausgebildet ist, wobei das erfindungsgemäße Verfahren die folgenden Verfahrensschritte umfasst:
a) Kontaktaufnahme zu dem Clouddienst mittels eines dazu ausgebildeten Kontaktgerätes, insbesondere eines Personal Computers oder eines Mobilgerätes, welches eine Vorrichtung zur Erfassung von Bildinformationen und/oder Akustikinformationen aufweist, insbesondere eine Kamera und/oder ein Mikrofon;
b) Ausrichten der Vorrichtung zur Erfassung von Bildinformationen und/oder Akustikinformationen, derart, dass die Vorrichtung zur Aussendung optischer und/oder akustischer Signale des Internet-of-Things Gerätes von der Vorrichtung zur Erfassung von Bildinformationen und/oder Akustikinformationen des Kontaktgerätes optisch und/oder akustisch erfassbar ist;
c) Übertragen von Geräteinformationen des Internet-of-Things Gerätes mittels der Vorrichtung zur Aussendung optischer und/oder akustischer Signale und mittels des Kontaktgerätes an den Onboarding-Service des Clouddienstes, wobei der Onboarding-Service die übertragenen Geräteinformationen automatisch in einem speziellen Gerätekonfigurationsspeicher hinterlegt;
d) Übertragen von Netzwerkkonfigurationsdaten an den Onboarding-Service des Clouddienstes mittels des Kontaktgerätes;
e) Erstellen eines Pairing Connectivity Files durch den Onboarding-Service, wobei das Pairing Connectivity File vorzugsweise Informationen bezüglich einer Verbindung des Internet-of-Things Gerätes mit dem Clouddienst und ein Maschinenzertifikat des Internet-of-Things Gerätes umfasst;
f) Übertragen des Pairing Connectivity Files an das Internet-of-Things Gerät mittels des Kontaktgerätes;
g) Aufbau der Verbindung von dem Internet-of-Things Gerät zu dem Clouddienst.

Das erfindungsgemäße Verfahren sieht vor, dass Informationen, insbesondere Verbindungsinformationen und Fehlerinformationen zwischen dem Internet-of-Things Gerät und dem Clouddienst mittels der optischen und/oder akustischen Schnittstelle des Internet-of-Things und einer entsprechend ausgestalteten, korrespondierenden Schnittstelle des Kontaktgerätes ausgetauscht werden.

Bei einer vorteilhaften Weiterbildung des Verfahrens wird ein Verbindungsstatus des Internet-of-Things Gerätes mit dem Clouddienst durch einen internen Prozess des Internet-of-Things Gerätes überwacht, wobei in einem Fehlerfall ein Diagnoseprozess gestartet wird, der die Verbindung überprüft und einen spezifischen Fehlermeldungscode generiert, der anschließend mittels der Vorrichtung zur Aussendung optischer und/oder Signale an das Kontaktgerät und von diesem an den Onboarding-Service übertragen wird.

Eine mögliche Fehlerquelle kann darin liegen, dass eine IPV4-Verbindung nicht zustande gekommen ist. Der Diagnoseprozess kann hieraus schließen, dass die Fehlerursache in der Netzwerkkonfiguration liegt. Mittels der optischen und/oder akustischen Schnittstelle des Internet-of-Things Gerätes kann der Diagnoseprozess daran anschließend die Fehlerursache mit einer exakten Fehlermeldung, in diesem Fall die Fehlermeldung eines IP-Protokollstapels, an das Kontaktgerät und damit mittelbar an Clouddienst übertragen. Dabei bedient sich der Diagnoseprozess des spezifischen Fehlermeldungscodes, der dem Clouddienst bekannt ist. Eine Fachkraft kann dann per Ferndiagnose bzw. -wartung entsprechende Maßnahmen ergreifen, ohne vor Ort am Internet-of-Things Gerät sein zu müssen. Die Fehlerdiagnose kann dabei nicht nur mittels des Clouddienstes erfolgen, sondern auch direkt am Kontaktgerät.

Vorteilhafterweise autorisiert sich ein Nutzer des Kontaktgerätes vor dem Beginn des Verbindungsverfahrens gegenüber dem Clouddienst, wobei ein Typ des Internet-of-Things Gerätes, das von dem Nutzer mit dem Clouddienst verbindbar ist, davon abhängig ist, welches Autorisierungslevel dem Nutzer vorab zugewiesen worden ist. Beispielsweise kann einer qualifizierten Fachkraft ein vollständiger Zugang zu allen Internet-of-Things Geräten zugewiesen werden, während eine weniger qualifizierte Fachkraft nur Berechtigungen für bestimmte Arten von Geräten erhält. Auf diese Art ist eine verlässliche und einfach zu realisierende Zugangskontrolle zu dem Clouddienst möglich.

Bei einer vorteilhaften Weiterbildung der Erfindung nimmt das Internet-of-Things Gerät nach dem Empfang des Pairing Connectivity Files eine Authentizitätsprüfung des Pairing Connectivity Files vor, vorzugsweise auf Basis eines Abgleichs eines im Pairing Connectivity File enthaltenen Maschinenzertifikats mit einem entsprechenden in dem Internet-of-Things Gerät hinterlegten Zertifikat. Dadurch kann das Internet-of-Things Gerät sicherstellen, dass es sich auch mit dem richtigen Clouddienst verbunden hat.

Das Pairing Connectivity File kann vorteilhafterweise zunächst von dem Onboarding-Service an das Kontaktgerät übertragen und anschließend mittels eines tragbaren Speichermediums, insbesondere USB-Sticks, von dem Kontaktgerät an das Internet-of-Things Gerät übertragen werden. Die Übertragung des Pairing Connectivity Files mittels des USB-Sticks stellt eine besonders sichere Übertragungsart dar.

Bevorzugt werden im Rahmen des Übertragens von Geräteinformationen des Internet-of-Things Gerätes mittels des Kontaktgerätes an den Onboarding-Service des Clouddienstes (Verfahrensschritt c des erfindungsgemäßen Verfahrens) folgende Verfahrensschritte durchgeführt:
i) Das Internet-of-Things Gerät überträgt Geräteinformationen mittels der Vorrichtung zur Aussendung optischer und/oder akustischer Signale an die Vorrichtung zur Erfassung von Bildinformationen und/oder Akustikinformationen des Kontaktgerätes;
ii) Die Geräteinformationen werden an einen Pairingdienst des Kontaktgerätes übertragen;
iii) Der Pairingdienst des Kontaktgerätes überträgt ein einmaliges Passwort an das Internet-of-Things Gerät, insbesondere mittels einer drahtlosen Verbindung, bevorzugt WLAN;
iv) Mittels des Passwortes verschlüsselt das Internet-of-Things Gerät die Geräteinformationen und sendet diese mittels der Vorrichtung zur Aussendung optischer und/oder akustischer Signale erneut an den Pairingdienst des Kontaktgerätes;
v) Der Pairingdienst entschlüsselt die von dem Internet-of-Things Gerät verschlüsselt erhaltenen Geräteinformationen; vi) Der Pairingdienst übermittelt die entschlüsselten Geräteinformationen des Internet-of-Things Gerätes an den Onboarding-Service des Clouddienstes.

Durch die optische und/oder akustische Übertragung des einmaligen Passwortes mittels der optischen und/oder akustischen Schnittstelle des Internet-of-Things Gerätes und des entsprechenden Empfängers des Kontaktgerätes kann sichergestellt werden, dass das Internet-of-Things Gerät dazu berechtigt ist, eine Verbindung mit dem Clouddienst aufzubauen. Aufgrund der zwingend notwendigen direkten optischen und/oder akustischen Kopplung von Internet-of-Things Gerät und Kontaktgerät muss immer ein IT-Administrator oder eine vergleichbar qualifizierte Fachkraft bei der Einrichtung der Verbindung vor Ort sein, was die Sicherheit erhöht. Darüber hinaus weiß das Internet-of-Things Gerät hierdurch, dass es sich mit dem richtigen Clouddienst verbindet. Eine Übertragung des Pairing Connectivity Files von dem Clouddienst an das Internet-of-Things Gerät mittels eines USB-Sticks ist dadurch nicht mehr notwendig, kann aber zusätzlich vorgenommen werden, um eine sicherheitstechnische Redundanz zu schaffen.

Die zuvor ausgeführte Aufgabe wird auch durch ein Verbindungssystem gelöst, umfassend ein Internet-of-Things Gerät mit einer Vorrichtung zur Aussendung optischer und/oder akustischer Signale, das dazu ausgebildet ist, Informationen mittels der Vorrichtung zur Aussendung optischer und/oder akustischer Signale zu übertragen, ein Kontaktgerät mit einer Vorrichtung zur Erfassung von Bildinformationen und/oder Akustikinformationen, und einen Clouddienst mit einem Onboarding-Service, wobei das Kontaktgerät dazu ausgebildet ist, eine Verbindung mit dem Onboarding-Service des Clouddienstes aufzubauen.

Bei einer bevorzugten Ausführungsform umfasst das Kontaktgerät des Verbindungssystems einen Pairingdienst aufweist, der dazu ausgebildet ist, von dem Internet-of-Things Gerät empfangene Daten zu verschlüsseln und zu entschlüsseln.

Im Zuge einer bevorzugten Verwendung kann das Verbindungssystem zum Betrieb einer technischen Anlage eingesetzt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein aus dem Stand der Technik bekanntes Verbindungssystem in einer Prinzipskizze; und
- Figur 2: ein erfindungsgemäßes Verbindungssystem in einer Prinzipskizze.

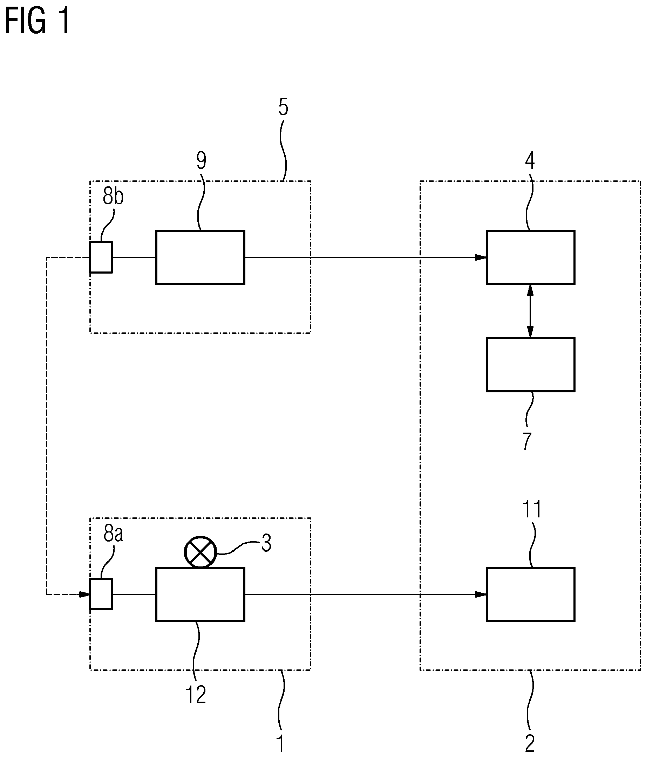

In Figur 1 ist ein Verbindungssystem, beispielsweise einer technischen Anlage, dargestellt. Das Verbindungssystem umfasst ein Internet-of-Things Gerät 1, ein Kontaktgerät 5 sowie einen Clouddienst 2.

Das Internet-of-Things Gerät 1 kann beispielsweise ein Feldgerät einer industriellen, technischen Anlage sein und weist eine Schnittstelle 8a für ein mobiles Speichermedium, insbesondere einen USB-Stick, auf. Des Weiteren umfasst das Internet-of-Things Gerät 1 eine Vorrichtung zur Aussendung optischer und/oder akustischer Signale 3 in Form einer Statuts-LED und eine zentrale Steuerungseinheit 12, beispielsweise einen Mikroprozessor.

Das Kontaktgerät 5 weist ebenfalls eine Schnittstelle 8b für ein mobiles Speichermedium, insbesondere einen USB-Stick, auf. Bei dem Kontaktgerät 5 kann es sich beispielsweise um einen Personal Computer oder ein Mobilgerät wie ein Tablet handeln.

Der Clouddienst 2 umfasst einen Onboarding-Service 4, einen Gerätekonfigurationsspeicher 7 und einen IoT Device Data Transfer Service 11. Der Clouddienst 2 kann beispielsweise im Umfeld der von Siemens entwickelten MindSphere® SaaS-Lösung betrieben werden.

Das Internet-of-Things Gerät 1 wird gemäß dem folgenden Verfahren mit einem Clouddienst 2 im Umfeld von MindSphere® verbunden:
a) Der Netzwerkkontext, insbesondere DHCP-Informationen, Informationen eines Proxyservers oder IO-Adressen, sowie Datenpunkte werden von einem lokalen IT-Administrator ermittelt, nachdem der IT-Administrator ein dazugehöriges Verbindungsnetzwerk aufgebaut hat;
b) In dem Kontaktgerät 5 wird mittels eines Softwareportals eines in dem Kontaktgerät 5 integrierten Pairingdienstes 9 der Onboarding-Service 4 des Clouddienstes 2 gestartet, wobei Konfigurationsinformationen des Internet-of-Things Gerätes 1, welches mittels einer Gerätenummer identifiziert wird, an den Onboarding-Service 4 übermittelt werden;
c) Anschließend generiert der Onboarding-Service 4 des Clouddienstes 2 ein Pairing Connectivity File, welches Informationen über die Verbindung zwischen dem Internet-of-Things Gerät 1 und dem Clouddienst 2 sowie ein Maschinenzertifikat des Internet-of-Things Gerätes 1 umfasst;
d) Das Pairing Connectivity File wird mittels des Kontaktgerätes 5 mittels der USB-Schnittstelle 8b auf einen USB-Stick übertragen und der USB-Stick mittels der korrespondierenden USB-Schnittstelle 8a mit dem Internet-of-Things Gerät (1) verbunden (die Übertragung des Pairing Connectivity Files mittels des USB-Sticks ist als gestrichelte Verbindung zwischen den beiden USB-Schnittstellen 8a, 8b dargestellt);
e) Das Internet-of-Things Gerät 1 liest die auf dem USB-Stick gespeicherten Informationen aus und vergleicht die Informationen mit einem auf dem Internet-of-Things Gerät 1 hinterlegten Zertifikat und übernimmt die Konfigurationsinformationen, wenn sie gültig sind.
f) Zuletzt wird eine Verbindung zwischen dem Internet-of-Things Gerät 1 und dem IoT Device Data Transfer Service 11 des Clouddienstes 2 hergestellt, um Daten zwischen dem Internet-of-Things Gerät 1 und dem Clouddienst 2 austauschen zu können.

Wenn die Verbindung zwischen dem Internet-of-Things Gerät 1 und dem IoT Device Data Transfer Service 11 des Clouddienstes 2 erfolgreich aufgebaut wurde, wird dies mittels der Status-LED 3 angezeigt, die in diesem Fall grün leuchtet. Ist die Verbindung nicht zustande gekommen, wird dies beispielsweise mittels einer gelben, orangen oder roten Farbgebung der Status-LED 3 angezeigt.

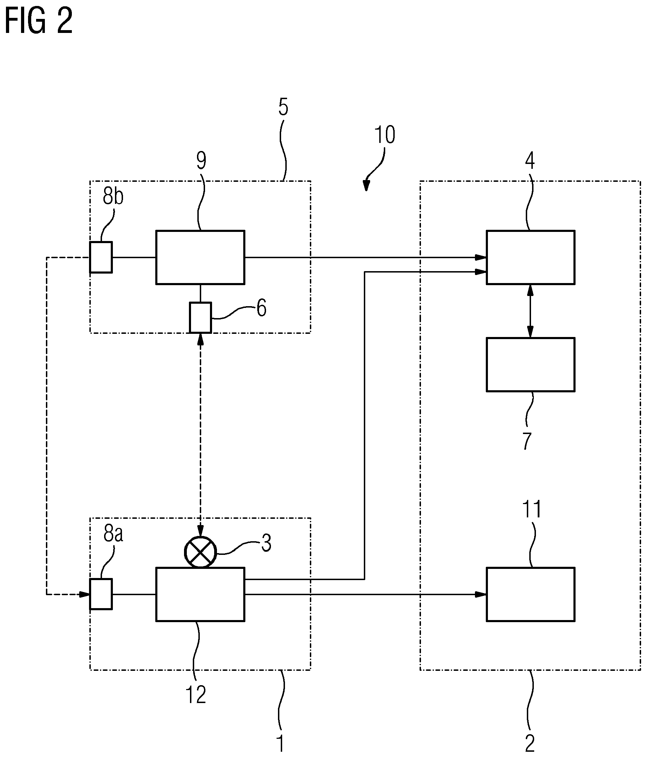

In Figur 2 ist ein erfindungsgemäßes Verbindungssystem 10 dargestellt. Das Verbindungssystem 10 umfasst ein Internet-of-Things Gerät 1, ein Kontaktgerät 5 sowie einen Clouddienst 2.

Das Internet-of-Things Gerät 1 kann beispielsweise ein Feldgerät einer industriellen, technischen Anlage sein und weist eine Schnittstelle 8a für ein mobiles Speichermedium, insbesondere einen USB-Stick, auf. Des Weiteren umfasst das Internet-of-Things Gerät 1 eine Vorrichtung zur Aussendung optischer und/oder akustischer Signale 3 in Form einer LED, und eine zentrale Steuerungseinheit 12, beispielsweise einen Mikroprozessor. Die zentrale Steuerungseinheit 12 ist dazu ausgebildet und vorgesehen, Informationscodes mittels der LED 3 optisch zu übermitteln.

Das Kontaktgerät 5 weist ebenfalls eine Schnittstelle 8b für ein mobiles Speichermedium, insbesondere einen USB-Stick, auf. Bei dem Kontaktgerät 5 kann es sich beispielsweise um einen Personal Computer oder ein Mobilgerät wie ein Tablet handeln. In dem Kontaktgerät ist ein Pairingdienst 9 integriert. Im Gegensatz zu dem aus dem Stand der Technik bekannten Verbindungssystem weist das Kontaktgerät 5 in dem in Figur 2 dargestellten erfindungsgemäßen Verbindungssystem 10 zusätzlich eine Vorrichtung zur Erfassung von Bildinformationen und/oder Akustikinformationen 6 in Form einer Kamera auf.

Der Clouddienst 2 ist analog zum illustrativen Verbindungssystem gemäß Figur 1 ausgebildet und umfasst einen Onboarding-Service 4, einen Gerätekonfigurationsspeicher 7 und einen IoT Device Data Transfer Service 11. Der Clouddienst 2 kann beispielsweise im Umfeld der von Siemens entwickelten MindSphere® SaaS-Lösung betrieben werden.

Eine Verbindung des Internet-of-Things Gerätes 1 mit dem Clouddienst 2 wird wie folgt aufgebaut.

Mittels des Pairingdienstes 9 des Kontaktgerätes 5, insbesondere eines Personal Computers oder eines Mobilgerätes, nimmt ein Nutzer Kontakt zu dem Clouddienst 2 auf. Dies kann beispielsweise durch Aufrufen eines speziellen Softwareportals erfolgen. Der Nutzer des Kontaktgerätes 5 autorisiert sich dabei gegenüber dem Clouddienst 2, wobei ein Typ des Internet-of-Things Gerätes 1, das von dem Nutzer mit dem Clouddienst 2 zu verbinden ist, davon abhängig ist, welches Autorisierungslevel dem Nutzer vorab zugewiesen worden ist.

Nach erfolgter Autorisierung wird die Kamera 6 des Kontaktgerätes 5 derart ausgerichtet, dass sie optische Informationen von der LED 3 des Internet-of-Things Gerätes 1 erfassen kann.

Anschließend werden Geräteinformationen des Internet-of-Things Gerätes 1 mittels der LED 3 an die Kamera 6 des Kontaktgerätes 5 übertragen. Die Geräteinformationen werden an den Pairingdienst 9 des Kontaktgerätes 5 übermittelt. Der Pairingdienst 9 des Kontaktgerätes 5 überträgt ein einmaliges Passwort an das Internet-of-Things Gerät 1, insbesondere mittels einer drahtlosen Verbindung, bevorzugt WLAN. Es ist auch möglich, das einmalige Passwort mittels eines USB-Sticks zwischen dem Kontaktgerät 5 und dem Internet-of-Things Gerät 1 auszutauschen.

Mittels des einmaligen Passwortes verschlüsselt das Internet-of-Things Gerät 1 dann die Geräteinformationen und sendet diese mittels der LED 3 erneut an den Pairingdienst 9 des Kontaktgerätes 5. Der Pairingdienst 9 entschlüsselt die von dem Internet-of-Things Gerät 1 verschlüsselt erhaltenen Geräteinformationen und übermittelt die entschlüsselten Geräteinformationen des Internet-of-Things Gerätes 1 anschließend an den Onboarding-Service 4 des Clouddienstes 2.

Die mittels des Kontaktgerätes 5 an den Onboarding-Service 4 des Clouddienstes 2 übertragenen Geräteinformationen werden schließlich automatisch in dem speziellen Gerätekonfigurationsspeicher des Clouddienstes 2 hinterlegt.

Daraufhin generiert der Onboarding-Service 4 ein Pairing Connectivity File, das vorzugsweise Informationen bezüglich einer Verbindung des Internet-of-Things Gerätes 1 mit dem Clouddienst 2 und ein Maschinenzertifikat des Internet-of-Things Gerätes 1 umfasst. Das Pairing Connectivity File wird danach an das Internet-of-Things Gerät 1 mittels des Kontaktgerätes 5 übertragen.

Das Pairing Connectivity File kann beispielsweise drahtlos an das Internet-of-Things Gerät 1 übertragen werden. Es kann aber auch mittels eines tragbaren Speichermediums 8a, 8b, insbesondere USB-Sticks, von dem Kontaktgerät 5 an das Internet-of-Things Gerät 1 übertragen werden.

Das Internet-of-Things Gerät 1 führt nach dem Empfang des Pairing Connectivity Files eine Authentizitätsprüfung des Pairing Connectivity Files durch, vorzugsweise auf Basis eines Abgleichs eines im Pairing Connectivity File enthaltenen Maschinenzertifikats mit einem entsprechenden in dem Internet-of-Things Gerät 1 hinterlegten Zertifikat.

Schließlich wird eine Verbindung des Internet-of-Things Gerätes 1 zu dem IoT Device Data Transfer Service 11 des Clouddienstes 2 aufgebaut.

Ein Verbindungsstatus des Internet-of-Things Gerätes 1 mit dem Clouddienst 2 bzw. dem IoT Device Data Transfer Service 11 wird dabei durch einen internen Prozess, der auf der Steuereinheit 12 des Internet-of-Things Gerätes 1 ausgeführt wird, überwacht. In einem Fehlerfall wird ein Diagnoseprozess gestartet, der die Verbindung überprüft und einen spezifischen Fehlermeldungscode generiert. Dieser wird anschließend mittels LED 3 an das Kontaktgerät 5 und von diesem an den Onboarding-Service 4 des Clouddienstes 2 übertragen, um eine qualifizierte und einfacher Fehlersuche durchführen zu können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen

## Patentansprüche

1. Verfahren zum Verbinden eines Internet-of-Things Gerätes (1) mit einem Clouddienst (2), wobei das Internet-of-Things Gerät (1) eine Vorrichtung zur Aussendung optischer und/oder akustischer Signale (3) aufweist, insbesondere wenigstens eine Leuchtdiode und/oder einen Lautsprecher, und wobei der Clouddienst (2) einen Onboarding-Service (4) aufweist, der zur Annahme von Anfragen des Internet-of-Things Gerätes (1) ausgebildet ist, das Verbindungsverfahren umfassend:
a) Kontaktaufnahme zu dem Clouddienst (2) mittels eines dazu ausgebildeten Kontaktgerätes (5), insbesondere eines Personal Computers oder eines Mobilgerätes, welches eine Vorrichtung zur Erfassung von Bildinformationen und/oder Akustikinformationen (6) aufweist, insbesondere eine Kamera und/oder ein Mikrofon;
b) Ausrichten der Vorrichtung zur Erfassung von Bildinformationen und/oder Akustikinformationen (6), derart, dass die Vorrichtung zur Aussendung optischer und/oder akustischer Signale (3) des Internet-of-Things Gerätes (1) von der Vorrichtung zur Erfassung von Bildinformationen und/oder Akustikinformationen (6) des Kontaktgerätes (5) optisch und/oder akustisch erfassbar ist;
c) Übertragen von Geräteinformationen des Internet-of-Things Gerätes (1) mittels der Vorrichtung zur Aussendung optischer und/oder akustischer Signale (3) und mittels des Kontaktgerätes (5) an den Onboarding-Service (4) des Clouddienstes (2), wobei der Onboarding-Service (4) die übertragenen Geräteinformationen automatisch in einem speziellen Gerätekonfigurationsspeicher (7) hinterlegt;
d) Erstellen eines Pairing Connectivity Files durch den Onboarding-Service (4), wobei das Pairing Connectivity File vorzugsweise Informationen bezüglich einer Verbindung des Internet-of-Things Gerätes (1) mit dem Clouddienst (2) und ein Maschinenzertifikat des Internet-of-Things Gerätes (1) umfasst;
e) Übertragen des Pairing Connectivity Files an das Internet-of-Things Gerät (1) mittels des Kontaktgerätes (5);
f) Aufbau der Verbindung von dem Internet-of-Things Gerät (1) zu dem Clouddienst (2).

2. Verfahren nach Anspruch 1, bei dem ein Verbindungsstatus des Internet-of-Things Gerätes (1) mit dem Clouddienst (2) durch einen internen Prozess des Internet-of-Things Gerätes (1) überwacht wird, wobei in einem Fehlerfall ein Diagnoseprozess gestartet wird, der die Verbindung überprüft und einen spezifischen Fehlermeldungscode generiert, der anschließend mittels der Vorrichtung zur Aussendung optischer und/oder Signale (3) an das Kontaktgerät (5) und von diesem an den Onboarding-Service (4) übertragen wird.

3. Verfahren nach einem der vorangegangenen Ansprüche, bei dem sich ein Nutzer des Kontaktgerätes (5) vor dem Beginn des Verbindungsverfahrens gegenüber dem Clouddienst (2) autorisiert, wobei ein Typ des Internet-of-Things Gerätes (1), das von dem Nutzer mit dem Clouddienst (2) verbindbar ist, davon abhängig ist, welches Autorisierungslevel dem Nutzer vorab zugewiesen worden ist.

4. Verfahren nach einem der vorangegangenen Ansprüche, bei dem das Internet-of-Things Gerät (1) nach dem Empfang des Pairing Connectivity Files eine Authentizitätsprüfung des Pairing Connectivity Files vornimmt, vorzugsweise auf Basis eines Abgleichs eines im Pairing Connectivity File enthaltenen Maschinenzertifikats mit einem entsprechenden in dem Internet-of-Things Gerät (1) hinterlegten Zertifikat.

5. Verfahren nach einem der vorangegangenen Ansprüche, bei dem das Pairing Connectivity File zunächst von dem Onboarding-Service (4) an das Kontaktgerät (5) übertragen wird und anschließend mittels eines tragbaren Speichermediums (8a, 8b), insbesondere USB-Sticks, von dem Kontaktgerät (5) an das Internet-of-Things Gerät (1) übertragen wird.

6. Verfahren nach einem der vorangegangenen Ansprüche, bei dem im Rahmen des Übertragens von Geräteinformationen des Internet-of-Things Gerätes (1) mittels des Kontaktgerätes (5) an den Onboarding-Service (4) des Clouddienstes (2) (Verfahrensschritt c des Anspruchs 1) folgende Verfahrensschritte durchgeführt werden:
i) Das Internet-of-Things Gerät (1) überträgt Geräteinformationen mittels der Vorrichtung zur Aussendung optischer und/oder akustischer Signale (3) an die Vorrichtung zur Erfassung von Bildinformationen und/oder Akustikinformationen (6) des Kontaktgerätes (5);
ii) Die Geräteinformationen werden an einen Pairingdienst (9) des Kontaktgerätes (5) übertragen;
iii) Der Pairingdienst (9) des Kontaktgerätes (5) überträgt ein einmaliges Passwort an das Internet-of-Things Gerät (1), insbesondere mittels einer drahtlosen Verbindung, bevorzugt WLAN;
iv) Mittels des Passwortes verschlüsselt das Internet-of-Things Gerät (1) die Geräteinformationen und sendet diese mittels der Vorrichtung zur Aussendung optischer und/oder akustischer Signale (3) erneut an den Pairingdienst (9) des Kontaktgerätes (5);
v) Der Pairingdienst (9) entschlüsselt die von dem Internet-of-Things Gerät (1) verschlüsselt erhaltenen Geräteinformationen;
vi) Der Pairingdienst (9) übermittelt die entschlüsselten Geräteinformationen des Internet-of-Things Gerätes (1) an den Onboarding-Service (4) des Clouddienstes (2).

7. Verbindungssystem (10) zum Verbinden eines Internet-of-Things Gerätes (1) mit einem Clouddienst (2), umfassend ein Internet-of-Things Gerät (1) mit einer Vorrichtung zur Aussendung optischer und/oder akustischer Signale (3), das dazu ausgebildet ist, Informationen mittels der Vorrichtung zur Aussendung optischer und/oder akustischer Signale (3) zu übertragen, ein Kontaktgerät (5) mit einer Vorrichtung zur Erfassung von Bildinformationen und/oder Akustikinformationen (6), und einen Clouddienst (2) mit einem Onboarding-Service (4), wobei das Kontaktgerät (5) dazu ausgebildet ist, eine Verbindung mit dem Onboarding-Service (4) des Clouddienstes (2) aufzubauen.

8. Verbindungssystem (10) nach Anspruch 7, bei dem das Kontaktgerät (5) einen Pairingdienst (9) aufweist, der dazu ausgebildet ist, von dem Internet-of-Things Gerät (1) empfangene Daten zu verschlüsseln und zu entschlüsseln.

9. Verwendung eines Verbindungssystems (10) gemäß einem der Ansprüche 7 oder 8 zum Betrieb einer technischen Anlage.
